## Europäisches Patentamt

## European Patent Office

## Office européen des brevets

(11) Veröffentlichungsnummer : **0 195 853**
**B1**

(12) **EUROPÄISCHE PATENTSCHRIFT**

(45) Veröffentlichungstag der Patentschrift :
**02.11.89**

(21) Anmeldenummer : **85115843.6**

(22) Anmeldetag : **12.12.85**

(51) Int. Cl.⁴ : **B 25 B 23/14**

(54) **Kupplung für kraftgetriebene Schraubwerkzeuge.**

(30) Priorität : **23.03.85 DE 3510605**

(43) Veröffentlichungstag der Anmeldung :
**01.10.86 Patentblatt 86/40**

(45) Bekanntmachung des Hinweises auf die Patenterteilung : **02.11.89 Patentblatt 89/44**

(84) Benannte Vertragsstaaten :
**CH DE FR GB IT LI NL SE**

(56) Entgegenhaltungen :
**DE–B– 1 403 393
DE–C– 437 803
US–A– 3 106 274**

(73) Patentinhaber : **C. & E. FEIN GmbH & Co.**
**Leuschnerstrasse 41-47**
**D-7000 Stuttgart 1 (DE)**

(72) Erfinder : **Die Erfinder haben auf ihre Nennung verzichtet**

(74) Vertreter : **Hoeger, Stellrecht & Partner**
**Uhlandstrasse 14 c**
**D-7000 Stuttgart 1 (DE)**

## Beschreibung

Die Erfindung betrifft eine kraftgetriebene Schraubwerkzeugmaschine mit einem Antrieb, einer ein Schraubwerkzeug aufnehmenden Werkzeugantriebswelle, welche bezüglich der Schraubwerkzeugmaschine in Richtung ihrer Drehachse verschieblich ist, einer den Antrieb mit der Werkzeugantriebswelle verbindenden, ausrückbaren Überlastkupplung, umfassend ein erstes vom Antrieb angetriebenes und drehbar gelagertes Kupplungselement, ein zweites, die Werkzeugantriebswelle treibendes Kupplungselement und ein zwischen dem ersten und zweiten Kupplungselement angeordnetes Zwischenkupplungselement sowie Flankenflächen aufweisende Nockenkörper zwischen dem Zwischenkupplungselement und einem der Kupplungselemente zum Auseinanderbewegen derselben und einander zugewandten Stirnseiten des anderen Kupplungselementes und des Zwischenkupplungselements zugeordnete Klauenkörper zum Herstellen einer Drehverbindung zwischen dem Zwischenkupplungselement und dem anderen Kupplungselement.

Eine derartige Schraubwerkzeugmaschine ist beispielsweise aus der DE-A-1 403 393 bekannt. Diese weist eine zwischen einer Antriebswelle und einer verschieblich in der Schraubwerkzeugmaschine gelagerten Werkzeugantriebswelle eine Kupplung auf, welche ein von der Antriebswelle angetriebenes erste Kupplungselement, ein Zwischenkupplungselement und ein die Werkzeugantriebswelle treibendes zweites Kupplungselement umfaßt. Dabei ist allerdings das Zwischenkupplungselement drehbar und axial unverschieblich auf der Antriebswelle angeordnet, während das erste Kupplungselement auf der Antriebswelle und das zweite Kupplungselement auf der Werkzeugantriebswelle drehfest, jedoch in axialer Richtung verschieblich sind. Zwischen dem ersten Kupplungselement und dem Zwischenkupplungselement sind als Nocken wirkende Kugeln angeordnet, welche bei Überschreiten eines maximalen Drehmoments das erste Kupplungselement von dem Zwischenkupplungselement weg in axialer Richtung verschieben. Dieses erste Kupplungselement betätigt. dann einen Ausrückmechanismus, welcher das zweite Kupplungselement von dem Zwischenkupplungselement weg verschiebt und in dieser von dem zweiten Kupplungselement weg verschobenen Stellung festlegt, so daß eine im Normalbetrieb bestehende Klauenverbindung zwischen dem Zwischenkupplungselement und dem zweiten Kupplungselement gelöst und in dieser Stellung verrastet wird. Erst durch ein erneutes Ansetzen des Schraubwerkzeugs wird der Betätigungsmechanismus derart betätigt, daß dieser eine im Schraubfall bestehende Klauenverbindung zwischen dem zweiten Kupplungselement und dem Zwischenkupplungselement löst und das zweite Kupplungselement in der gelösten Stellung verrastet. Diese Rastverbindung wird im Zuge eines Abhebens und erneuten Ansetzens des Schraubwerkzeugs gelöst, so daß das Zwischenkupplungselement mit dem zweiten Kupplungselement wieder drehfest verbunden und eine Drehmomentsübertragung wieder möglich ist. Besonders hervorzuheben ist, daß beim Lösen der Verbindung zwischen der Antriebswelle und der Werkzeugantriebswelle die Drehmomentübertragung zwischen dem ersten Kupplungselement und dem Zwischenkupplungselement durch Wegbewegen des ersten Kupplungselements von dem Zwischenkupplungselement, bedingt durch die Kugeln, nur kurzzeitig gelöst und sofort wieder hergestellt wird, so daß zwischen diesen keine dauerhafte Trennung erfolgt, sondern lediglich die Verschiebung des ersten Kupplungselements dazu ausgenutzt wird, um über den Betätigungsmechanismus ein Trennen der Verbindung zwischen dem Zwischenkupplungselement und dem zweiten, auf der Werkzeugantriebswelle sitzenden Kupplungselement herbeizuführen.

Diese bekannte Vorrichtung ermöglicht zwar, eine geräuscharme und verschleißfreie Kupplung zu schaffen, bei welcher nach Erreichen des Grenzdrehmoments kein « Rattern » der Verbindungskörper auftritt, sie hat jedoch den großen Nachteil, daß sie sehr kompliziert aufgebaut und dabei aufwendig und teuer herzustellen ist.

Der Erfindung liegt daher die Aufgabe zugrunde, eine konstruktiv einfach aufgebaute und daher kostengünstig herzustellende Schraubwerkzeugmaschine mit einer geräuscharmen und verschleißfreien Kupplung zu schaffen.

Diese Aufgabe wird bei einer Schraubwerkzeugmaschine der eingangs beschriebenen Art erfindungsgemäß dadurch gelöst, daß sie die Merkmale des zweites Teils des Hauptanspruchs aufweist.

Durch die erfindungsgemäße Dreiteilung der Kupplungsanordnung wird somit vorteilhafterweise erreicht, daß die Kupplung in eine Überlastebene, die bei Erreichen eines Grenzdrehmoments über eine kraftschlüssige Verbindung aktiviert wird, und eine Mitnahmeebene, die die Schraubbewegung über eine formschlüssige Verbindung überträgt, aufgeteilt wird.

Bei Erreichen des Grenzdrehmoments gleiten die Flankenflächen der Nockenkörper des Zwischenkupplungselements oder der Zwischenscheibe über die Flankenflächen der Nocken des anderen Kupplungselements oder Zahnrades, und durch die Kraft des Federelements wird das Zwischenkupplungselement gegen das eine Kupplungselement oder die Kupplungscheibe gedrückt. Durch die abgesetzte Form der Klauenkörper und durch den Druck des Federelements ist gewährleistet, daß nach dem ersten Lösen der Verbindung zwischen den Kupplungselementen der Überlastkupplung die Nockenkörper nicht mehr in Eingriff geraten, auch wenn das Schraubwerkzeug noch auf einem Schraubenkopf sitzt.

Weitere vorteilhafte Merkmale sind Gegenstand der Unteransprüche.

Insbesondere erlaubt die Ausgestaltung der Klauenkörper gemäß den Ansprüchen 2 und 3 sowie die Ausgestaltung der Nockenkörper gemäß Anspruch 4 ein problemloses Funktionieren der Anordnung, dadurch ein genaues Abstimmen der Winkel der Eingriffsflächen und Schrägen der Klauenkörper sowie der Winkel der Flankenflächen der Nockenkörper ein Optimum für eine geräuscharme und verschleißfreie Kupplungsfunktion erreicht wird.

Darüber hinaus erlaubt Anspruch 5 eine kostengünstige Herstellung einer erfindungsgemäßen Schraubwerkzeugmaschine.

In gleicher Weise ist dies bei der einstücken Ausbildung der Antriebswelle gemäß Anspruch 6 der Fall, da nur ein Federelement zum Ausrücken der Überlastkupplung erforderlich ist.

Weitere Merkmale und Vorteile sind Gegenstand der nachfolgenden Beschreibung sowie der zeichnerischen Darstellung einiger Ausführungsbeispiele. In der Zeichnung zeigen :

Fig. 1 eine vereinfachte, zum Teil geschnittene Teildarstellung einer erfindungsgemäßen Schraubwerkzeugmaschine und

Fig. 2a bis 2d schematische Darstellungen einer Kupplung in verschiedenen Stellungen.

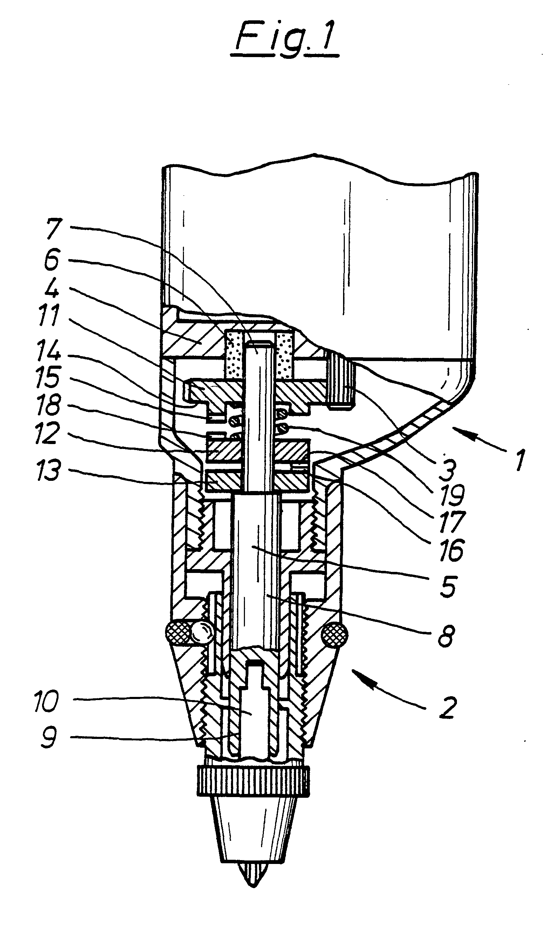

Das Schraubwerkzeug nach Fig. 1 weist im wesentlichen einen nicht dargestellten Motor, ein Getriebe 1 und einen Tiefenanschlag 2 auf. Ein Ritzel 3 des Motors ragt in das Getriebegehäuse 4. Parallel zum Ritzel 3 ist im Getriebegehäuse 4 eine Antriebswelle 5 angeordnet. Die Antriebswelle 5 ist einerseits im Getriebegehäuse 4 durch das Lager 6 drehbar gelagert und andererseits im Tiefenanschlag 2 angeordnet. Die Antriebswelle 5 besitzt in dem Bereich, der sich im Getriebegehäuse 4 befindet, einen Abschnitt 7, der einen geringeren Durchmesser aufweist als der restliche Abschnitt 8 der Antriebswelle 5. Auf der Stirnseite des Abschnitts 8 der Antriebswelle 5 befindet sich die Aufnahme 9 für einen Werkzeugeinsatz 10.

Auf dem Abschnitt 7 der Antriebswelle 5 stützt sich ein Zahnrad 11 an dem Lager 6 ab. Das Zahnrad 11 ist auf dem Abschnitt 7 drehbar und axial beweglich angeordnet. Auf seiner dem Lager 6 abgewandten Stirnseite 14 ist das Zahnrad 11 mit einem Nockenkranz 15 versehen. Drehfest und axial nicht verschiebbar ist eine Kupplungsscheibe 13 auf dem Abschnitt 7 angeordnet. Seine Klauen 16 sind auf der Seite angeordnet, die dem Zahnrad 11 zugewandt ist. Zwischen Kupplungsscheibe 13 und Zahnrad 11 ist eine Zwischenscheibe 12 angeordnet. Die Zwischenscheibe 12 ist drehbar und axial beweglich auf den Abschnitt 7 aufgesetzt. Auf beiden Stirnseiten weist die Zwischenscheibe 12 Klauen 17 und Nocken 18 auf, die mit den Klauen 16 und Nocken 15 der Kupplungsscheibe 13 und des Zahnrades 10 korrespondieren können. Zwischen Zahnrad 11 und Zwischenscheibe 12 ist eine Druckfeder 19 auf dem Abschnitt 7 angeordnet.

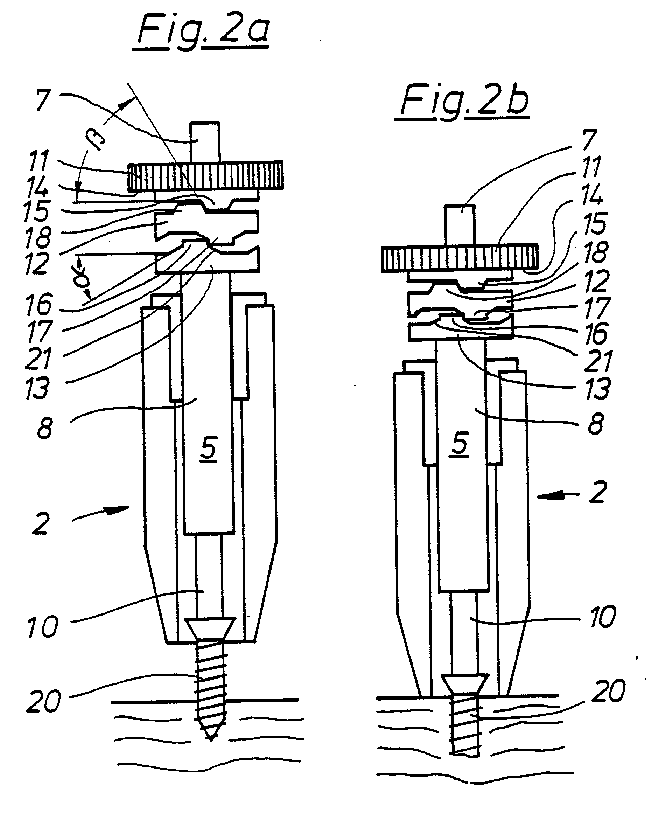

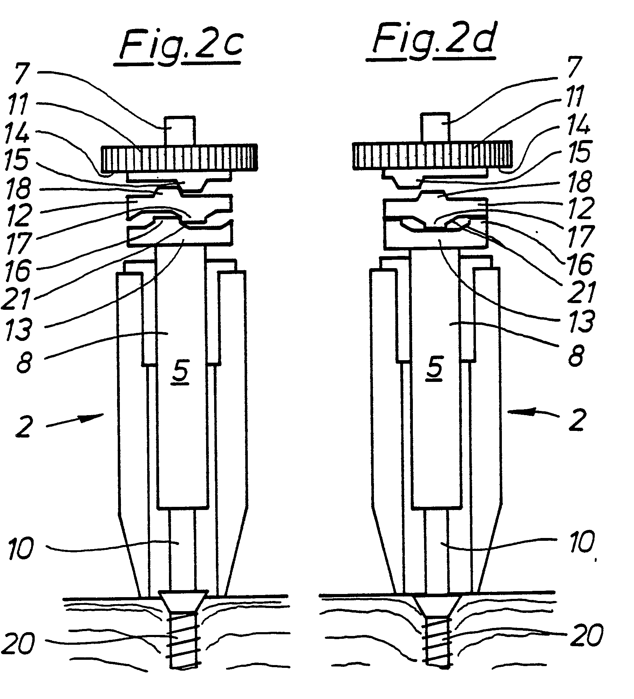

In Fig. 2a wird das Kupplungssystem in dem Zustand gezeigt, in dem es sich befindet, wenn das Werkzeug auf den Kopf einer Schraube 20 aufgesetzt wird. Durch das Aufsetzen drückt die Antriebswelle 5 über die Kupplungsscheibe 13 und die Zwischenscheibe 12 die Druckfeder 19 zusammen, dabei kommen die Nocken 15 und 18 in Eingriff. Die Drehbewegung des Zahnrades 11 wird somit über die Zwischenscheibe 12 und die Kupplungsscheibe 13 auf die Antriebswelle 5 übertragen. Beim Einsetzen der Drehung gleiten die Klauenflanken auf den Schrägen 21 und gelangen in formschlüssigen Eingriff. Die Schraube 20 wird eingeschraubt, wie in Fig. 2b zu sehen ist.

In Fig. 2c ist das Drehmoment, das für das Einschrauben zu erbringen ist, so weit angestiegen, daß die Flanken, der Nocken 15 und 18 aufeinander gleiten und die Zwischenscheibe 12, mit Unterstützung der Feder 19, vom Zahnrad 11 wegbewegt wird.

Fig. 2d stellt die Kupplung nach Erreichen der vorgewählten Einschraubtiefe dar. Die Nocken 15 und 18 sind außer Eingriff, und die Zwischenscheibe 12 wird durch die Feder 19 in dieser Stellung gehalten, so daß die Klauen nicht aufeinander schlagen können. Die Klauen 17 der Zwischenscheibe 12 werden durch die Feder 19, über die Schräge 21 auf die Stirnfläche der Kupplungsscheibe 13 gedrückt.

Das in den Fig. 2 dargestellte Zusammenspiel der Kupplungsteile kann nur funktionieren, wenn die Form der Nocken und Klauen aufeinander abgestimmt ist. Bei der Klauenpaarung 16, 17 ist die Form der Klauen so gewählt, daß beim ersten Übertragen des Drehmoments die Zwischenscheibe 12 über eine Schräge 21 mit einem Winkel von $\alpha \approx 30°$ von der Kupplungsscheibe 13 wegbewegt wird. Danach geraten die Klauen 16, 17 über den Flankenbereich, der parallel zur Achse ausgerichtet ist, in formschlüssigen Eingriff. Die Nockenpaarung 15, 18 dient zum Auskuppeln, beim Erreichen eines Grenzdrehmoments. Dabei hat sich herausgestellt, daß die Flanken, in einem Winkel zur Stirn Fläche von $\beta \approx 60°$ angeordnet, zu einem günstigen Ergebnis führen.

Selbstverständlich ist es möglich, diese Kupplungsanordnung auch umzukehren, so daß die Ebene der formschlüssigen Übertragung der Drehbewegung und die Ebene der kraftschlüssigen Überlastkupplung ausgetauscht werden, damit sind die gleichen Vorteile zu erzielen wie mit der beschriebenen Anordnung.

**Patentansprüche**

1. Kraftgetriebene Schraubwerkzeugmaschine mit

einem Antrieb (3),

einer ein Schraubwerkzeug (10) aufnehmenden Werkzeugantriebswelle (5), welche bezüglich der Schraubwerkzeugmaschine in Richtung ihrer Drehachse verschieblich ist,

einer den Antrieb (3) mit der Werkzeugantriebswelle (5) verbindenden, ausrückbaren Überlastkupplung, umfassend ein erstes vom Antrieb (3) angetriebenes und drehbar gelagertes Kupplungselement (11), ein zweites, die Werkzeugantriebswelle (5) treibendes Kupplungselement (13) und ein zwischen dem ersten und zweiten Kupplungselement (11, 13) angeordnetes Zwischenkupplungselement (12) sowie Flankenflächen aufweisende Nockenkörper (15, 18) zwischen dem Zwischenkupplungselement (12) und einem der Kupplungselemente (11) zum Auseinanderbewegen derselben und den einander zugewandten Stirnseiten des anderen Kupplungselements (13) und des Zwischenkupplungselements (12) zugeordnete Klauenkörper (16, 17) zum Herstellen einer Drehverbindung zwischen dem Zwischenkupplungselement (12) und dem anderen Kupplungselement (13), dadurch gekennzeichnet

daß die Schraubwerkzeugmaschine einen einstellbaren Tiefenanschlag (2) aufweist, gegenüber welchem die Werkzeugantriebswelle (5) axial verschiebbar ist,

daß das erste Kupplungselement (11) ein auf der Werkzeugantriebswelle angeordnetes Zahnrad ist,

daß das zweite Kupplungselement (13) fest mit der Werkzeugantriebswelle (5) verbunden ist,

daß die Nockenkörper (15, 18) den einander zugewandten Stirnseiten des einen Kupplungselements (11) und des Zwischenkupplungselements (12) zugeordnet sind,

daß das Zwischenkupplungselement (12) auf der Werkzeugantriebswelle (5) drehbar und axial verschieblich gelagert und somit von einer Mitnahmestellung, ausgehend von dem einen Kupplungselement (11), auf das andere Kupplungselement (13) zu, in eine Überlaststellung, bewegbar ist,

daß die Klauenkörper (16, 17) das Zwischenkupplungselement und das andere Kupplungselement ständig verbinden und in ihrer Form so auf die Form der Nockenkörper abgestimmt sind, daß sie in der Mitnahmestellung des Zwischenkupplungselements (12) formschlüssig in Eingriff stehen und mittels Schrägen (21) eine Bewegung des Zwischenkupplungselements (12) von der Mitnahmestellung in die Überlaststellung erlauben, durch welche die Nockenkörper zum Ausrücken der Kupplung außer Eingriff bringbar sind, und

daß zwischen dem Zwischenkupplungselement (12) und dem einen Kupplungselement (11) ein das Zwischenkupplungselement (12) in Überlaststellung beaufschlagendes und in dieser haltendes Federelement angeordnet ist.

2. Schraubwerkzeugmaschine nach Anspruch 1, dadurch gekennzeichnet, daß die Klauenkörper (16, 17) der Mitnahmekupplung parallel zur Drehachse und im rechten Winkel zur Stirnfläche der Kupplungselemente (12, 13) ausgerichtete Eingriffsflächen aufweisen und daß die Eingriffsflächen über in einem Winkel α zur Stirnfläche verlaufende Schrägen (21) in die Stirnfläche übergehen.

3. Schraubwerkzeugmaschine nach Anspruch 2, dadurch gekennzeichnet, daß der Winkel α ungefähr 30° beträgt.

4. Schraubwerkzeugmaschine nach einem der voranstehenden Ansprüche, dadurch gekennzeichnet, daß die Flankenflächen der Nockenkörper (15, 18) der Überlastkupplung in einem Winkel β von ungefähr 60° zur Stirnfläche der Kupplungselemente (11, 12) verlaufen.

5. Schraubwerkzeugmaschine nach einem der voranstehenden Ansprüche, dadurch gekennzeichnet, daß die Klauenkörper (16, 17) des anderen Kupplungselements (13) und des Zwischenkupplungselements (12) formgleich ausgebildet sind.

6. Schraubwerkzeugmaschine nach einem der voranstehenden Ansprüche, dadurch gekennzeichnet, daß die Werkzeugantriebswelle (5) einstückig ausgebildet ist.

## Claims

1. Power-operated screwing tool machine comprising

a drive (3),

a tool drive shaft (5) receiving a screwing tool (10) and being displaceable with respect to the screwing tool machine in the direction of its axis of rotation,

a disengageable overload clutch connecting the drive (3) with the tool drive shaft (5) and comprising a first rotatably mounted clutch element (11) driven by the drive (3), a second clutch element (13) driving the tool drive shaft (5) and an intermediate clutch element (12) arranged between the first and second clutch elements (11, 13) as well as cam members (15, 18) with flank surfaces between the intermediate clutch element (12) and one of the clutch elements (11) for moving these apart and claw members (16, 17) associated with the end faces of the other clutch element (13) and of the intermediate clutch element (12) that face each other for establishing a rotary connection between the intermediate clutch element (12) and the other clutch element (13), characterized

in that the screwing tool machine comprises an adjustable depth stop (2) with respect to which the tool drive shaft (5) is axially displaceable,

in that the first clutch element (11) is a gear arranged on the tool drive shaft,

in that the second clutch element (13) is fixedly connected to the tool drive shaft (5),

in that the cam members (15, 18) are associated with the end faces of the one clutch element (11) and of the intermediate clutch element (12) that face each other,

in that the intermediate clutch element (12) is rotatably and axially displaceably mounted on the tool drive shaft (5) and hence is movable from a take-along position, starting from the one clutch element (11), towards the other clutch element (13), into an overload position,

in that the claw members (16, 17) constantly connect the intermediate clutch element and the other clutch element and are adapted in shape to the shape of the cam members such that they engage positively when the intermediate clutch element (12) is in the take-along position and by means of inclined surfaces (21) permit motion of the intermediate clutch element (12) from the take-along position to the overload position by means of which the cam members are disengageable for disengagement of the clutch,

and in that a spring element is arranged between the intermediate clutch element (12) and the one clutch element (11) to act upon and keep the intermediate clutch element (12) in the overload position.

2. Screwing tool machine according to Claim 1, characterized in that the claw members (16, 17) of the take-along clutch comprise engagement surfaces oriented parallel to the axis of rotation and at a right angle to the end face of the clutch elements (12, 13), and in that the engagement surfaces pass into the end face via inclined surfaces (21) extending at an angle α to the end face.

3. Screwing tool machine according to Claim 2, characterized in that the angle α is approximately 30 degrees.

4. Screwing tool machine according to one of the preceding claims, characterized in that the flank surfaces of the cam members (15, 18) of the overload clutch extend at an angle β of approximately 60 degrees to the end face of the clutch elements (11, 12).

5. Screwing tool machine according to one of the preceding claims, characterized in that the claw members (16, 17) of the other clutch element (13) and of the intermediate clutch element (12) are of identical shape.

6. Screwing tool machine according to one of the preceding claims, characterized in that the tool drive shaft (5) is of integral design.


**Revendications**

1. Machine à visser entraînée par moteur comprenant

un entraînement (3),

un arbre d'entraînement d'outil (5) recevant un outil à visser (10) et qui est déplaçable dans le sens de son axe de rotation par rapport à la machine à visser,

un accouplement de surcharge débrayable qui relie l'entraînement (3) à l'arbre d'entraînement d'outil (5) et comporte un premier élément d'accouplement (11) commandé par l'entraînement (3) et monté rotatif, un deuxième élément d'accouplement (13) commandant l'arbre d'entraînement d'outil (5) et un élément d'accouplement intermédiaire (12) disposé entre les premier et deuxième éléments d'accouplement (11, 13), de même que des bossages (15, 18) présentant des flancs et disposés entre l'élément d'accouplement intermédiaire (12) et l'un (11) des éléments d'accouplement pour écarter cet élément d'accouplement et l'élément d'accouplement intermédiaire l'un de l'autre, et des griffes (16, 17) coordonnées aux faces frontales dirigées l'une vers l'autre de l'autre élément d'accouplement (13) et de l'élément d'accouplement intermédiaire (12) pour établir une liaison en rotation entre l'élément d'accouplement intermédiaire (12) et cet autre élément d'accouplement (13), caractérisée en ce

qu'elle présente une butée de profondeur (2) réglable, par rapport à laquelle l'arbre d'entraînement d'outil (5) est déplaçable axialement,

que le premier élément d'accouplement (11) est une roue dentée disposée sur l'arbre d'entraînement d'outil,

que le deuxième élément d'accouplement (13) est relié rigidement à l'arbre d'entraînement d'outil (5),

que les bossages (15, 18) sont coordonnés aux faces frontales dirigées l'une vers l'autre de l'élément d'accouplement (11) mentionné en premier et de l'élément d'accouplement intermédiaire (12),

que l'élément d'accouplement intermédiaire (12) est monté rotatif et axialement coulissant sur l'arbre d'entraînement d'outil (5) et peut donc être déplacé depuis une position d'entraînement, à partir de l'élément d'accouplement (11) mentionné en premier, en direction de l'autre élément d'accouplement (13), jusqu'à une position de surcharge,

que les griffes (16, 17) relient en permanence l'élément d'accouplement intermédiaire et l'autre élément d'accouplement et sont adaptées par leur forme à la forme des bossages, de manière qu'elles soient mutuellement en prise par sûreté de forme à la position d'entraînement de l'élément d'accouplement intermédiaire (12) et permettent, grâce à des faces inclinées (21), un mouvement de l'élément d'accouplement intermédiaire (12) de la position d'entraînement à la position de surcharge, mouvement par lequel les bossages peuvent être écartés les uns des autres pour le débrayage de l'accouplement, et

qu'un élément élastique est disposé entre l'élément d'accouplement intermédiaire (12) et l'élément d'accouplement (11) mentionné en premier, élément élastique qui agit en direction de la position de surcharge sur l'élément d'accouplement intermédiaire (12) et le maintient à cette position.

2. Machine selon la revendication 1, caractérisée en ce que les griffes (16, 17) de l'accouplement d'entraînement présentent des faces de prise orientées parallèlement à l'axe de rotation et perpendiculairement à la face frontale des éléments d'accouplement (12, 13) et que ces faces de prise se raccordent à la face frontale par des faces inclinées (21) orientées sous un angle α par rapport à la face frontale.

3. Machine selon la revendication 2, caractérisée en ce que l'angle α est environ de 30°.

4. Machine selon une des revendications précédentes, caractérisée en ce que les bossages (15, 18) de l'accouplement de surcharge présentent des flancs orientés sous un angle β d'environ 60° par rapport à la face frontale des éléments d'accouplement (11, 12).

5. Machine selon une des revendications précédentes, caractérisée en ce que les griffes (16, 17) de l'autre élément d'accouplement (13) et de l'élément d'accouplement intermédiaire (12) ont la même forme.

6. Machine selon une des revendications précédentes, caractérisée en ce que l'arbre d'entraînement d'outil (5) est réalisé d'un seul tenant.

## _Fig.1_

Fig. 2a

Fig. 2b

2

*Fig.2c*

*Fig.2d*